# EUROPÄISCHE PATENTSCHRIFT

(11) **EP 2 503 055 B1**
(45) Veröffentlichungstag und Bekanntmachung des Hinweises auf die Patenterteilung: **02.04.2014**
(21) Anmeldenummer: 11007162.8
(22) Anmeldetag: 05.09.2011
(51) Int. Cl.: D21F 5/02, D21F 5/18

(54) **Verfahren zur Herstellung eines Yankeezylinders**
Method for producing a yankee dryer
Procédé de fabrication d'un cylindre Yankee

(30) Priorität: 21.03.2011 AT 3962011
(43) Veröffentlichungstag der Anmeldung: 26.09.2012
(73) Patentinhaber: Andritz AG, 8045 Graz (AT)
(72) Erfinder: Krasser, Josef, Ing., 8103 Rein (AT); Maier, Markus, Dipl.-Ing., 8301 Lassnitzhöhe (AT); Kahsiovky, Ludwig, 8044 Weinitzen (AT)
(74) Vertreter: Tschinder, Thomas

(56) Entgegenhaltungen:
- US-A- 3 052 039
- US-A- 4 320 582
- US-A- 6 018 870

## Beschreibung

Den Gegenstand der Erfindung bildet ein Verfahren zur Fertigung eines Yankeezylinders aus Stahl.

Für die Herstellung von Papierbahnen oder Tissue, ist es üblich, sogenannte Yankeezylinder im Trocknungsprozess einzusetzen.

Yankeezylinder haben meistens einen sehr großen Durchmesser. Sie werden von Innen her mit Dampf beheizt und sind schwer herstellbar, da hohe Anforderungen in Bezug auf die internen Drücke, Dichtheit und die großen Durchmesser erfüllt werden müssen.

Handelsübliche Yankeezylinder weisen beispielsweise folgende Dimensionen auf:

| | |
|---|---|
| Zylinderdurchmesser: | 2000 mm bis 6500 mm |
| Hohlwellendurchmesser: | 1000 mm bis 2500 mm |
| Zylinderlänge: | 3000 mm bis 8500 mm |
| Zylindermasse: | 35 t bis 140 t |

Diese Zylinder werden überwiegend aus Gusseisen hergestellt, aus dem U.S. Patent US 4,196,689 und der WO 2008/105005 A1 sind aber auch bereits Yankeezylinder aus Stahl bekannt.
Die US 3,052,039 offenbart beispielsweise einen Yankeezylinder aus Stahl, bei dem der Zylindermantel aus einzelnen Mantelblechen zusammengeschweißt wird. Der fertige Zylindermantel wird dann nach dem Zusammenschweißen an seiner Innenseite und an seiner Außenseite einer mechanischen Bearbeitung unterzogen. Ebenso offenbart die US 6,018,870 einen Trocknungszylinder aus Stahl, der aus mehreren Segmenten zusammengesetzt ist. Hierbei handelt es sich jedoch nicht um einen Yankeezylinder sondern um einen Trockenzylinder, dessen Zylindermantel mit Dampfbohrungen durchsetzt ist.
Gewöhnlich besteht ein Yankeezylinder aus einer zylindrischen Mantelfläche, welche an den Enden mit Enddeckeln verschlossen wird. Die beiden Deckel können dabei mit dem Zylindermantel verschraubt oder auch verschweißt werden.

Ein Yankeezylinder wird über Zapfen drehbar gelagert und weist in seinem Inneren eine Hohlwelle oder Achse auf, durch die Dampf zur Beheizung in den Zylinder eingebracht wird bzw. Abdampf und Kondensat abgeführt werden kann.

Oft weist der Zylindermantel an seiner Innenfläche eine große Anzahl von Rillen auf, die den Wärmeübergang von der beheizten Zylinderinnenseite zur Zylinderoberfläche verbessern, ohne die Bauteilfestigkeit des Mantels gravierend zu schwächen.

Das herkömmliche Verfahren zur Herstellung eines geschweißten Yankee-Zylindermantels ist durch folgenden Fertigungsablauf gekennzeichnet:
1. Zuschnitt und Einrollen der Mantelbleche
2. Verschweißen der Mantelbleche zum fertigen Zylindermantel
3. mechanische Bearbeitung des gesamten Zylindermantels an der Außen- und Innenseite, sowie an den Stirnseiten
4. Anbau der stirnseitigen Deckel durch Verschrauben oder Schweißen

Da die Zylindermäntel eine Dimension von bis zu 6500 mm Durchmesser und 8500 mm Länge aufweisen, sind für die mechanische Bearbeitung des Zylindermantels sehr große und teure Werkzeugmaschinen erforderlich bzw. sind Maschinen dieser Dimension bei Maschinenbauern sehr selten vorhanden.
Unter mechanische Bearbeitung werden in der vorliegenden Erfindung Dreh- und Fräsbearbeitungsschritte verstanden.

Ziel der Erfindung ist es daher, ein kostengünstigeres Herstellverfahren für einen Yankeezylinder zu beschreiben, das alle Anforderungen bezüglich Qualität und Maßgenauigkeit erfüllt.

Das erfindungsgemäße Fertigungsverfahren des Zylindermantel aus Stahl umfasst dabei folgende Schritte:
a.) in einem ersten Schritt erfolgt ein Zuschnitt und Einrollen der Mantelbleche;
b.) danach erfolgt ein Verschweißen der Mantelbleche zu zwei oder mehreren Zylinderschüssen (8, 9, 10);
c.) danach erfolgt die mechanische Vorbearbeitung der einzelnen Zylinderschüsse (8, 9, 10) an der Innen- und Außenseite 15, 16), sowie an den Stirnseiten;
d.) danach erfolgt das Verschweißen der Zylinderschüsse (8, 9, 10) zu einem fertigen Zylindermantel (2).

Die Idee der Erfindung beruht also darauf, kürzere Zylinderschüsse einzeln herzustellen und dann durch geeignete Arbeitsfolgen und Schweißverfahren zu einem ganzen Zylinder zusammenzuschweißen, ohne dass eine weitere mechanische Bearbeitung des gesamten Zylindermantels erforderlich ist bzw. dass eine mechanische Bearbeitung des Zylinders auf ein Minimum reduziert werden kann.

Durch die kürzeren Zylinderschüsse ist eine einfachere mechanische Bearbeitung möglich und überdies sind nicht so große (hohe) Bearbeitungsmaschinen erforderlich.

Vorzugsweise werden nach dem Schritt c.) und vor dem Schritt d.) die einzelnen Zylinderschüsse (8, 9, 10) an der Innen- und Außenseite (15, 16), sowie an den Stirnseiten mechanisch fertig bearbeitet.

Somit sind für die gesamte mechanische Bearbeitung des Zylindermantels, also für die Dreh- und Fräsbearbeitung keine großen Bearbeitungsmaschinen erforderlich. Der ganze Zylindermantel wird dann nach dem Verschweißen lediglich einer Schleifbearbeitung unterzogen. Bei der Schleifvorrichtung handelt es sich aber primär um eine Hilfskonstruktion, die einen weit weniger komplexen Aufbau als eine Drehbearbeitungsmaschine aufweist.

Bisher konnten einige Kunden nicht oder nur mit erheblichen Aufwand mit großen Yankeezylindern beliefert werden, da die Yankeezylinder durch Ihre Größe oder durch ihr Gewicht nicht und nur sehr schwierig an ihren Einsatzstandort gelangen konnten.

Das erfindungsgemäße Fertigungsverfahren ermöglicht es nun, dass auch diese Kunden leichter mit großen Yankeezylindern beliefert werden können. Dabei werden die Schritte a.) b.) c.) beim herkömmlichen Fertigungsstandort, beispielsweise einem Anlagenbauer, durchgeführt. Der Schritt d.) erfolgt aber dann vorzugsweise in der Nähe des endgültigen Einsatzstandortes des Yankeezylinders, also der Betriebsstätte des Yankees.

Idealerweise erfolgt das Verschweißen der Zylinderschüsse direkt am Werksgelände des Papiermaschinenbetreibers oder des Tissuemaschinenbetreibers.

Die einzelnen Zylinderschüsse, vorzugsweise mit bereits stirnseitig angebauten Deckeln, können einzeln viel leichter und günstiger zum Kunden transportiert werden, als fertig zusammengebaute Zylinder.

Vor Ort bzw. in der Nähe des Einsatzstandortes kann dann auch noch eine mechanische Fertigbearbeitung der einzelnen Zylinderschüsse erfolgen, natürlich ist es günstiger, wenn bereits mechanisch vor- und fertigbearbeitete Zylinderschüsse vom Fertigungsstandort abtransportiert werden.

Es ist günstig, wenn am oder in der Nähe des Einsatzortes des Yankeezylinders das Verschweißen der Zylinderschüsse gemäß Schritt d.) zumindest von einer Seite her durch einen mobilen Schweißroboter bzw. durch ein elektro-mechanisches Schweißfahrwerk, der oder das auf einer an den Zylinderschüssen angebrachten Hilfsschiene geführt ist, durchgeführt wird.

Unter einem mobilen Schweißroboter wird ein Schweißroboter verstanden, der leicht und mit geringem Aufwand an unterschiedliche Einsatzorte transportiert werden kann. Hierbei erweisen sich Engspaltschweißroboter bzw. elektro-mechanische Schweißfahrwerke als besonders nützlich. Somit kann beim Kunden der endgültige Zusammenbau des Yankeezylinders erfolgen, ohne dass der Kunde hierzu spezielle Bearbeitungs- oder Schweißmaschinen besitzen muss.

Vorzugsweise werden nach dem Schritt c.) und vor dem Schritt d.) die stirnseitigen Deckel (3, 4) an die entsprechende Zylinderschüsse (8, 9, 10) angebaut.

Damit die geometrische Form des Zylinders nicht durch Schweißverzüge bzw. Schrumpfungen verändert wird, muss ein geeignetes Schweißverfahren für das Zusammenfügen der einzelnen Zylinderschüsse zu einem ganzen Zylinder gewählt werden. Es hat sich als sehr günstig erwiesen, für das Verschweißen der Zylinderschüsse das Engspalt-Schweißverfahren zu benutzen. Es gewährleistet neben einer ausgezeichneten Schweißqualität auch geringe Schweißschrumpfungen.

Eine allfällige Gegenschweißung von der Gegenseite kann mit üblichen Schweißverfahren durchgeführt werden.

Es ist günstig, wenn die innenliegende Schweißnaht, also die Schweißnaht an der Zylinderinnenseite, mit dem Engspalt-Schweißverfahren gezogen wird, da diese Schweißnaht erheblich zur Stabilität des Yankeezylinders beiträgt. Das Engspalt-Schweißverfahren wird vorzugsweise durch einen Schweißroboter bzw. durch ein elektro-mechanisches Schweißfahrwerk ausgeführt. Die Schweißnaht an der Zylinderaußenseite kann dann von Hand gezogen werden.

Bei gerillten Zylindern kann die Schweißnaht dabei sowohl zwischen den Rillen des Zylinders wie auch in einer Rille des Zylinders liegen.

Die im Schritt d.) gebildete Schweißnaht kann dann gegebenenfalls nachbearbeitet werden, die kann aber auch durch kleinere Bearbeitungsmaschinen erfolgen.

Im Folgenden wird die Erfindung anhand von Zeichnungen beschrieben.

Es zeigt:
Fig. 1 einen Yankeezylinder aus Stahl;
Fig. 2 den fertig zusammengeschweißten Zylindermantel;
Fig. 3a und Fig. 3b die mögliche Lage der Schweißnähte;
Fig. 4a, b, c unterschiedliche Ausführungen der Schweißnaht;

Gleiche Bezugszeichen in den einzelnen Figuren bezeichnen jeweils gleiche Bauteile.

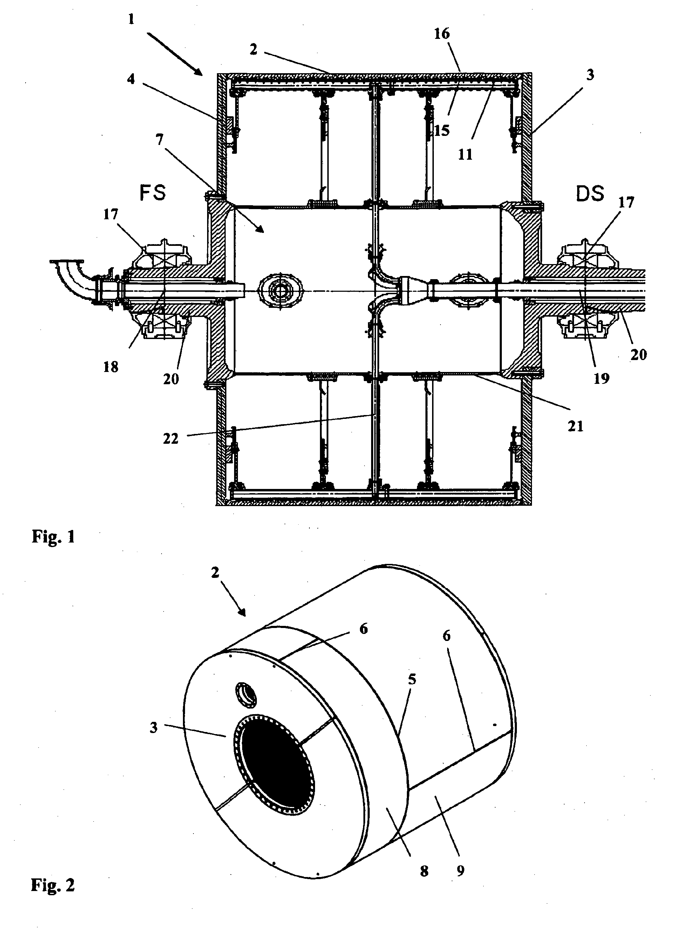

In Fig. 1 ist ein Yankeezylinder 1 dargestellt. Er besteht aus einem zylinderförmigen Stahlmantel 2, der mit den beiden Enddeckeln 3 und 4 verschweißt bzw. verschraubt ist.

Im Inneren des Yankeezylinders 1 befindet sich eine Zentralwelle 7 mit dem Zentralteil 21 und den beiden Lagerzapfen 20, die in den Lagern 17 drehbar gelagert sind.

Über die Dampfzufuhr 18 kann dem Yankeezylinder 1 Dampf zugeführt werden. Abdampf bzw. Kondensat wird über die Kondensatleitung 22 bzw. 19 abgeführt. An der Zylinderinnenseite 15 befindet sich eine Vielzahl von Rillen 11. Durch die Rillen 11 wird der Wärmeübergang zur Zylinderaußenseite 16 begünstigt und die Kondensatabfuhr erleichtert.

Bei den bisherigen Herstellungsverfahren nach dem Stand der Technik werden einzelne Mantelbleche zugeschnitten, eingerollt und zu Zylinderschüssen zusammengeschweißt. Diese Zylinderschüsse werden dann in einem weiteren Schritt zu einem fertigen Zylindermantel zusammengeschweißt. Danach erfolgt die mechanische Bearbeitung des gesamten Zylindermantels an der Außen- und Innenseite, sowie an den Stirnseiten. Schlussendlich werden die stirnseitigen Deckel durch Verschrauben oder Schweißen angebracht. Derartige Herstellungsverfahren benötigen sehr große Maschinen für die mechanische Bearbeitung.

Bei der vorliegenden Erfindung werden in einem ersten Schritt einzelne Mantelbleche zugeschnitten und eingerollt und danach zu einzelnen Zylinderschüssen 8, 9, 10 zusammengeschweißt. Diese Zylinderschüsse 8, 9, 10 werden dann an der Innen-und Außenseite 15, 16, sowie an den Stirnseiten mechanisch vor- und idealerweise fertigbearbeitet. Erst danach werden diese vorzugsweise fertig bearbeiteten Zylinderschüsse 8, 9, 10 zu einem fertigen Zylindermantel zusammengeschweißt. Vor dem Zusammenschweißen der einzelnen Zylinderschüsse 8, 9, 10 können auch stirnseitig die beiden Enddeckel 3 und 4 angebaut werden.

In Fig. 2 ist beispielhaft ein zusammengebauter Zylindermantel 2 dargestellt. Man erkennt dabei die beiden Zylinderschüsse 8 und 9 und die beiden Schweißnähte 6, durch die die eingerollten Mantelbleche zu einem Zylinderschuss zusammengefügt wurden. Ein Zylinderschuss kann dabei aus mehreren einzelnen Mantelblechen zusammengefügt werden. In Fig. 2 ist auch die umlaufende Schweißnaht 5 dargestellt, die die beiden Zylinderschüsse 8 und 9 verbindet. Diese Schweißnaht wurde erst gesetzt, nachdem die einzelnen Zylinderschüsse 8, 9 fertig bearbeitet waren.

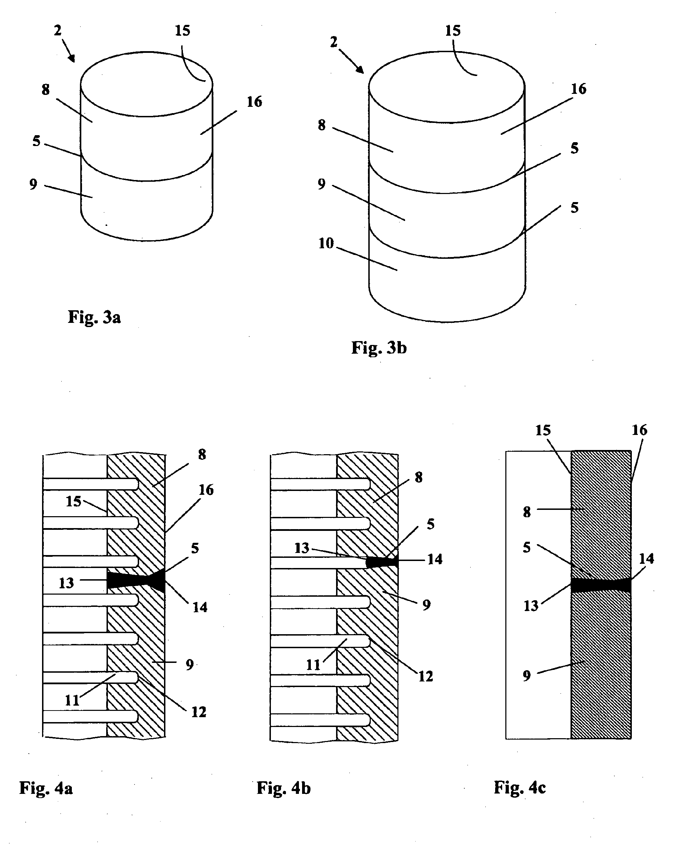

Der Zylindermantel kann beispielsweise aus zwei einzelnen Zylinderschüssen 8, 9 aufgebaut werden, wie dies in den Fig. 2 und Fig. 3a dargestellt ist, er kann aber auch aus drei, wie in Fig. 3b dargestellt, oder mehreren einzelnen Zylinderschüssen 8, 9, 10 aufgebaut sein.

Zur Verschweißung der einzelnen Zylinderschüsse untereinander eignet sich das sogenannte Engspalt-Schweißverfahren besonders gut. Das Engspalt-Schweißverfahren ist in Fachkreisen ein etabliertes Schweißverfahren, bei dem der Wärmeeintrag ins Material und somit auch der Wärmeverzug minimiert werden. Bei diesem Verfahren werden vorzugsweise mit dem WIG-Verfahren und mit einer pendelnden Elektrode bzw. mit einem Engspaltschwert Spalte in der Größenordnung von 2mm - 20 mm verschweißt.

In den Figuren 4a bis 4c sind unterschiedliche Ausführungen der Schweißverbindung 5 zwischen den Zylinderschüssen 8 und 9 dargestellt.

Bei Druckbehältern, wie einem Yankeezylinder 1, wird in der Regel die Schweißverbindung 5 durch eine Innenschweißnaht 13 an der Zylinderinnenseite 15 und durch eine Außenschweißnaht 14 an der Zylinderaußenseite 16 realisiert.

Die Fig. 4a und Fig. 4b zeigen einen Zylindermantel 2 mit Rillen 11 an der Zylinderinnenseite 15. Die Innenschweißnaht 13 kann dabei zwischen zwei Rillen 11 angebracht werden, wie dies in Fig. 4a dargestellt ist, oder aber in einer Rille 11, also am Rillenboden 12. Eine derartige Innenschweißnaht 13 ist in Fig. 4b dargestellt. Fig. 4c zeigt eine Innenschweißnaht 13 und eine Außenschweißnaht 14 bei einem nicht gerillten Zylindermantel 2.

## Patentansprüche

1. Verfahren zur Fertigung eines Yankeezylinders (1) aus Stahl umfassend folgende Schritte:
a.) in einem ersten Schritt werden einzelne Mantelbleche zugeschnitten und eingerollt;
b.) danach werden die Mantelbleche zu zwei oder mehreren Zylinderschüssen (8, 9, 10) zusammengeschweißt;
c.) danach werden die einzelnen Zylinderschüsse (8, 9, 10) an der Innen- und Außenseite (15, 16), sowie an den Stirnseiten mechanisch vorbearbeitet;
d.) danach werden die Zylinderschüsse (8, 9, 10) zu einem fertigen Zylindermantel (2) zusammengeschweißt.

2. Verfahren nach Anspruch 1, **dadurch gekennzeichnet, dass** nach dem Schritt c.) und vor dem Schritt d.) die einzelnen Zylinderschüsse (8, 9, 10) an der Innen- und Außenseite (15, 16), sowie an den Stirnseiten, mechanisch fertig bearbeitet werden.

3. Verfahren nach einem der Ansprüche 1 oder 2, **dadurch gekennzeichnet, dass** die Schritte a.) b.) und c.) an einem bestimmten Fertigungsstandort durchgeführt werden und dass der Schritt d.) nicht an diesem Fertigungsstandort durchgeführt wird.

4. Verfahren nach Anspruch 3, **dadurch gekennzeichnet, dass** der Schritt d.) in der Nähe eines Einsatzstandortes für den Yankeezylinder (1), vorzugsweise am Werksgelände eines Papiermaschinen- oder Tissuemaschinenbetreibers, durchgeführt wird.

5. Verfahren nach Anspruch 4, **dadurch gekennzeichnet, dass** mechanisch vor und fertigbearbeitete Zylinderschüsse (8, 9, 10) einzeln vom Fertigungsstandort in die Nähe des Einsatzortes geliefert werden.

6. Verfahren nach einem der Ansprüche 4 bis 5, **dadurch gekennzeichnet, dass** das Verschweißen der Zylinderschüsse (8, 9, 10) zumindest von einer Seite
her durch einen mobilen Schweißroboter bzw. durch ein elektro-mechanisches Schweißfahrwerk, das auf einer an den Zylinderschüssen (8, 9, 10) angebrachten Hilfsschiene geführt ist, durchgeführt wird.

7. Verfahren nach einem der Ansprüche 1 bis 6, **dadurch gekennzeichnet, dass** nach dem Schritt c.) und vor dem Schritt d.) die stirnseitigen Deckel (3, 4) an die entsprechenden Zylinderschüsse (8, 9, 10) angebaut werden.

8. Verfahren nach Anspruch 7, **dadurch gekennzeichnet, dass** die stirnseitigen Deckel (3, 4) angeschweißt werden.

9. Verfahren nach Anspruch 7, **dadurch gekennzeichnet, dass** die stirnseitigen Deckel (3, 4) angeschraubt werden.

10. Verfahren nach einem der Ansprüche 1 bis 9, **dadurch gekennzeichnet, dass** die einzelnen Zylinderschüsse (8, 9, 10) zumindest von einer Seite her über ein Engspelt-Schweißverfahren zusammengeschweißt werden.

11. Verfahren nach Anspruch 10, **dadurch gekennzeichnet, dass** die einzelnen Zylinderschüsse (8, 9, 10) an der Innenseite (15) umlaufende Rillen (11) aufweisen und dass die Verschweißung am Rillenboden (12) erfolgt.

12. Verfahren nach Anspruch 10, **dadurch gekennzeichnet, dass** die einzelnen Zylinderschüsse (8, 9, 10) an der Innenseite (15) umlaufende Rillen (11) aufweisen und dass die Verschweißung zwischen den Rillen (11) erfolgt.

13. Verfahren nach einem der Ansprüche 1 bis 12, **dadurch gekennzeichnet, dass** die im Schritt d.) gebildete Schweißnaht nachbearbeitet wird.

14. Verfahren nach einem der Ansprüche 1 bis 13, **dadurch gekennzeichnet, dass** der fertig zusammengeschweißte Zylindermantel (2) des Yankeezylinders (1) beschichtet und geschliffen wird.

## Claims

1. Process for manufacturing a steel Yankee cylinder (1), comprising the following steps:
a.) in a first step, the individual shell plates are cut and curled;
b.) then the shell plates are welded together to form two or more cylinder sections (8, 9, 10);
c.) after this, the individual cylinder sections (8, 9, 10) are machined on the inside and outside (15, 16) and on the end faces;
d.) then the cylinder sections (8, 9, 10) are welded together to form a complete cylinder shell (2).

2. Process according to Claim 1, **characterized by** the individual cylinder sections (8, 9, 10) being finish-machined on the inside and outside (15, 16), as well as on the end faces after step c.) and before step d.).

3. Process according to one of Claims 1 or 2, **characterized by** steps a.), b.) and c.) being carried out at a specific manufacturing location and step d.) not being carried out at this manufacturing location.

4. Process according to Claim 3, **characterized by** step d.) being carried out in the vicinity of the operating location for the Yankee cylinder (1), preferably on the works premises of a paper or tissue machine operator.

5. Process according to Claim 4, **characterized by** pre-machined and finish-machined cylinder sections (8, 9, 10) being delivered individually from the manufacturing location to the vicinity of the operating location.

6. Process according to one of Claims 4 to 5, **characterized by** the cylinder sections (8, 9, 10) being welded, at least from one side, by a mobile welding robot or an electro-mechanical welding carriage that runs on an auxiliary rail mounted on the cylinder sections (8, 9, 10).

7. Process according to one of Claims 1 to 6, **characterized by** the end faces (3, 4) being joined to the respective cylinder shells (8, 9, 10) after step c.) and before step d.).

8. Process according to Claim 7, **characterized by** the end faces (3, 4) being welded on.

9. Process according to Claim 7, **characterized by** the end faces (3, 4) being bolted on.

10. Process according to one of Claims 1 to 9, **characterized by** the individual cylinder sections (8, 9, 10) being welded together, at least from one side, using a narrow groove welding process.

11. Process according to Claim 10, **characterized by** the individual cylinder sections (8, 9, 10) having grooves (11) running in circumferential direction on the inside (15) and by welds being made in the floor (12) of the groove.

12. Process according to Claim 10, **characterized by** the individual cylinder sections (8, 9, 10) having grooves (11) running in circumferential direction on the inside (15) and by the welds being between the grooves (11).

13. Process according to one of Claims 1 to 12, **characterized by** the weld made in step d.) being re-machined.

14. Process according to one of Claims 1 to 13, **characterized by** the fully welded cylinder shell (2) of the Yankee cylinder (1) being coated and ground.

## Revendications

1. Procédé de fabrication d'un sécheur Yankee (1) en acier, comportant les étapes suivantes:
a.) dans une première étape, des viroles de chemise sont découpées et enroulées,
b.) par la suite, les viroles de chemise sont jointes par soudage pour former deux ou plusieurs tronçons de cylindre (8, 9, 10),
c.) puis, les surfaces intérieures et extérieures (15, 16) ainsi que les fronts des tronçons de cylindre (8, 9, 10) individuels sont soumis à un usinage d'ébauchage,
d.) ensuite, les tronçons de cylindre (8, 9,10) sont joints par soudage pour former une chemise de cylindre (2) complète.

2. Procédé selon la revendication 1, **caractérisé en ce qu'**après l'étape c.) et avant l'étape d.), les surfaces intérieures et extérieures (15, 16) ainsi que les fronts des tronçons de cylindre (8, 9, 10) individuels sont soumis à un usinage de finition.

3. Procédé selon l'une des revendications 1 ou 2, **caractérisé en ce que** les étapes a.), b.) et c.) sont exécutées à un certain emplacement de fabrication et que l'étape d.) ne s'exécute pas à cet emplacement.

4. Procédé selon la revendication 3, **caractérisé en ce que** l'étape d.) se trouve exécutée près d'un emplacement d'utilisation du sécheur Yankee (1), de préférence dans l'enceinte d'une entité exploitante d'une machine à papier ou de papier ouate.

5. Procédé selon la revendication 4, **caractérisé en ce que** des tronçons de cylindre (8, 9, 10), qui ont été soumis à un usinage d'ébauchage et de finition, sont transportés individuellement à partir de l'emplacement de fabrication dans la proximité de l'emplacement d'utilisation.

6. Procédé selon l'une des revendications 4 à 5, **caractérisé en ce que** le soudage des tronçons de cylindre (8, 9, 10) se fait, au moins d'un côté, par un robot de soudage mobile, respectivement une tête de soudage menée sur un rail auxiliaire monté sur les tronçons de cylindre (8, 9, 10).

7. Procédé selon l'une des revendications 1 à 6, **caractérisé en ce qu'**après l'étape c.) et avant l'étape d.), les couvercles de front (3, 4) sont joints aux tronçons de cylindre (8, 9, 10) appropriés.

8. Procédé selon la revendication 7, **caractérisé en ce que** les couvercles de front (3, 4) sont joints par soudage.

9. Procédé selon la revendication 7, **caractérisé en ce que** les couvercles de front (3, 4) sont joints par vissage.

10. Procédé selon l'une des revendications 1 à 9, **caractérisé en ce que** les tronçons de cylindre (8, 9, 10) individuels sont joints, au moins d'un côté, à l'aide d'un procédé de soudage de chanfrein étroit.

11. Procédé selon la revendication 10, **caractérisé en ce que** les tronçons de cylindre (8, 9, 10) individuels comportent, sur leurs surfaces intérieures (15), des rainures s'étendant dans le sens circonférentiel (11) et que la soudure est appliquée au fond (12) des rainures.

12. Procédé selon la revendication 10, **caractérisé en ce que** les tronçons de cylindre (8, 9, 10) individuels comportent, sur leurs surfaces intérieures (15) des rainures s'étendant dans le sens circonférentiel (11) et que la soudure est appliquée entre les rainures (11).

13. Procédé selon l'une des revendications 1 à 12, **caractérisé en ce que** la soudure effectuée à l'étape d.) est soumise à un usinage d'ébauchage.

14. Procédé selon l'une des revendications 1 à 13, **caractérisé en ce que** la chemise de cylindre (2) du sécheur Yankee (1) est revêtue et affûtée.
